# EUROPÄISCHE PATENTSCHRIFT

(11) **EP 1 987 885 B1**
(45) Veröffentlichungstag und Bekanntmachung des Hinweises auf die Patenterteilung: **04.08.2010**
(21) Anmeldenummer: 07009089.9
(22) Anmeldetag: 04.05.2007
(51) Int. Cl.: B65D 83/14, B65D 83/16, A61C 17/02, A61C 19/06

(54) **Sprühdose**
Dispensing aerosol
Bombe aérosol

(43) Veröffentlichungstag der Anmeldung: 05.11.2008
(73) Patentinhaber: Dentaco Dentalindustrie und -marketing GmbH, 61352 Bad Homburg (DE)
(72) Erfinder: Sògaro, Alberto C., 61476 Kronberg (DE)
(74) Vertreter: advotec.

(56) Entgegenhaltungen:
- EP-A- 1 118 554
- EP-A- 1 430 959
- DE-A1- 3 918 313
- DE-A1-102005 010 191
- FR-A- 2 872 023
- JP-A- 11 147 578
- US-A- 6 050 505

## Beschreibung

Die Erfindung betrifft eine Sprühdose, die einen Dosenkörper zur Aufnahme eines zu versprühenden Stoffes sowie einen Sprühkopf umfasst, der auf ein an der Oberseite des Dosenkörpers angeordnetes Dosenventil aufgesteckt ist.

Derartige Sprühdosen sind aus der Praxis in vielfältiger Weise bekannt und werden beispielsweise auch im Hygiene-, Medizin- und Dentalbereich eingesetzt. Der Dosenkörper ist in der Regel aus Metall gefertigt und weist an seiner Oberseite ein weibliches oder männliches Ventil auf, das durch axialen Druck in reversibler Weise geöffnet werden kann. Zur Betätigung des Ventils ist auf dieses ein Sprühkopf aufgesteckt, durch den beispielsweise eine Zerstäubung des zu versprühenden Stoffes erfolgen kann.

Insbesondere im Medizin- und/oder Dentalbereich kann es aus Hygienegründen erforderlich sein, den Sprühkopf regelmäßig zu wechseln. Bei den vorstehend beschriebenen herkömmlichen Sprühdosen gestaltet sich dies aufwändig, da der Sprühkopf von einem Benutzer direkt gegriffen und mit gegebenenfalls erheblichem Kraftaufwand von dem Dosenventil abgezogen werden muss.

Eine Sprühdose mit den Merkmalen des Oberbegriffs des Patentanspruches 1 ist aus der Druckschrift JP 11 147578 A bekannt. Diese Sprühdose umfasst einen Dosenkörper zur Aufnahme eines zu versprühenden Stoffes, einen Sprühkopf, der auf ein an der Oberseite des Dosenkörpers angeordnetes Dosenventil aufgesteckt ist, sowie einen Aufsatz, der auf den Dosenkörper an dessen Oberseite aufgesetzt ist und eine zentrale Ausnehmung zur Kopplung des Sprühkopfes mit dem Dosenventil umfasst. Der Sprühkopf ist über eine Lasche an den Aufsatz angebunden. Im auf das Dosenventil aufgesetzten Zustand des Sprühkopfes weist die Lasche eine bezogen auf die Dosenachse radial nach außen gerichtete Wölbung auf. Durch Drücken der Lasche kann der Sprühkopf von dem Dosenventil gelöst werden.

Der Erfindung liegt die Aufgabe zugrunde, eine Sprühdose bereitzustellen, bei der ein einfaches Wechseln des Sprühkopfes möglich ist.

Diese Aufgabe ist erfindungsgemäß durch die Sprühdose mit den Merkmalen des Patentanspruchs 1 gelöst.

Erfindungsgemäß wird mithin ein Aufsatz für eine Sprühdose bereitgestellt, der auf den Dosenkörper an dessen Oberseite aufgesetzt ist, eine zentrale Ausnehmung zur Kopplung des Sprühkopfes mit dem Dosenventil umfasst sowie mit einer Abhebeeinrichtung für den Sprühkopf versehen ist, durch deren Betätigung der Sprühkopf von dem Dosenventil lösbar ist.

Die Abhebeeinrichtung umfasst mindestens einen stößelartigen Zapfen, der mit einer dem Dosenkörper zugewandten Fläche oder Kante des Sprühkopfs zusammenwirkt und zum Lösen des Sprühkopfs von dem Dosenventil den Sprühkopf untergreift. Der stößelartige Zapfen hat insbesondere eine bezogen auf die Achse des Dosenkörpers radiale Ausrichtung, so dass durch ein Drücken des Zapfens auf dessen Stirnseite der Sprühkopf gegenüber dem Dosenkörper versetzt wird und ein Abheben des Sprühkopfs von dem Dosenventil ausgelöst werden kann. Der Zapfen durchgreift insbesondere eine Umfangswand des Aufsatzes.

Durch Bereitstellen des Aufsatzes mit der Abhebeeinrichtung liegt ein Mittel vor, durch dessen Betätigung der Sprühkopf in einfacher Weise von dem Dosenventil bzw. dem Dosenkörper gelöst und gewechselt werden kann. Ein neuer Sprühkopf kann dann nach dem Lösen des benutzten Sprühkopfs einfach auf das Dosenventil aufgesetzt werden.

Um das Zusammenwirken zwischen dem Sprühkopf und dem Dosenventil zu verbessern, weist der Zapfen stirnseitig bzw. wirkflächenseitig vorzugsweise eine Auflauframpe für den Sprühkopf auf.

Bei einer herstellungstechnisch bevorzugten Ausführungsform der Sprühdose nach der Erfindung ist der Aufsatz als einstückiges Kunststoffspritzgießteil ausgebildet. Es entfallen dann einem Spritzgießprozess nachgeschaltete Montageschritte für den Aufsatz und die Abhebeeinrichtung.

Vielmehr muss der Aufsatz nur auf den Dosenkörper aufgesetzt bzw. aufgerastet werden.

Bei einer speziellen Ausführungsform der Sprühdose nach der Erfindung hat der Aufsatz eine zylindrische Umfangsfläche, die im Wesentlichen mit dem Umfang des Dosenkörpers fluchtet und an der der Zapfen einstückig angeformt ist. Eine solche Ausführung ist insbesondere auch aus Designgründen vorteilhaft.

Um ein manuelles Rückstellen des Zapfens nach dessen Betätigung entbehrlich zu machen, ist der Zapfen bei einer bevorzugten Ausführungsform federnd mit der Umfangswand verbunden.

Die federnde Ausführung des Zapfens kann insbesondere dadurch erreicht werden, dass die Umfangswand oberhalb und unterhalb des Zapfens zur Ausbildung einer Federlasche, mit der der Zapfen verbunden ist, jeweils einen in Umfangsrichtung verlaufenden Schlitz hat. Es ist aber auch denkbar, dass Schlitze zur Ausbildung einer Federlasche, an der der Zapfen angebunden ist, in axialer Richtung der Sprühdose verlaufen. Gegebenenfalls kann aber auch auf die Ausbildung derartiger Schlitze verzichtet werden, wenn das Material der Umfangswand eine hinreichende Eigenelastizität mit einem hinreichenden Rückstellverhalten aufweist.

Der Aufsatz kann des Weiteren auch dazu genutzt werden, dass der Druck des auszusprühenden Stoffes begrenzt wird. Dies kann dadurch erreicht werden, dass der Aufsatz einen Anschlag für den Sprühkopf bei dessen Niederdrücken aufweist. Der Aufsatz begrenzt damit den Hub des Sprühkopfs und somit auch die Öffnung des Ventils und den damit verbundenen Materialstrom.

Eine herstellungstechnisch einfache Ausführungsform des Anschlags besteht darin, dass er von einem radial nach innen vorstehenden Bund im Bereich im Bereich der Ausnehmung gebildet ist. Beim Niederdrücken schlägt der Sprühkopf damit an dem Bund an.

Um die Abhebeeinrichtung nicht zu behindern, ist es vorteilhaft, wenn der Bund im Bereich des Zapfens unterbrochen ist.

Um ein versehentliches Verkippen des Sprühkopfs und damit eine Fehlfunktion der Sprühdose zu verhindern, ist der Sprühkopf vorzugsweise in einer Mulde des Aufsatzes angeordnet.

Zum Ausbringen des zu versprühenden Stoffes kann in den Sprühkopf eine Kanüle bzw. ein Röhrchen eingesteckt sein. Mittels der Kanüle können schwer erreichbare Bereiche, beispielsweise im Mund eines Patienten, zielgenau erreicht und mit dem zu versprühenden Stoff beaufschlagt werden.

Zur Anpassung der Sprühdose an die Verhältnisse bei der Anwendung, d. h. beim Versprühen des Stoffes, kann die Kanüle teleskopierbar ausgebildet sein.

Um das Sprühverhalten in gewünschter Weise vorzugeben, kann an dem dem Sprühkopf abgewandten Ende der Kanüle eine Düse angeordnet sein. Die Düse ist vorzugsweise an den jeweiligen Anwendungsfall angepasst.

Um insbesondere in einem Mund eines Patienten eine Zahnfläche mit dem zu versprühenden Stoff mit geringem Platzbedarf beaufschlagen zu können, ist es vorteilhaft, wenn die Düse selbst ein bogenförmiges Gehäuse hat, das mit der Kanüle verbunden ist, so dass die Achse der Austrittsöffnung gegenüber der Achse der Kanüle angestellt ist. Damit kann der Stoff im Wesentlichen von oben auf die gewünschte Fläche gesprüht werden.

Die Düse ist insbesondere eine Oraldüse, mittels der eine Pigmentsuspension zerstäubbar ist.

Eine derartige Oraldüse hat beispielsweise einen Durchmesser von 3 bis 8 mm und eine Länge von etwa 10 bis 15 mm und ist somit in optimaler Weise an die Abmessungen von Zähnen angepasst.

Weitere Vorteile und vorteilhafte Ausgestaltungen des Gegenstandes der Erfindung sind der Zeichnung, der Beschreibung und den Patentansprüchen entnehmbar.

Ein Ausführungsbeispiel einer Sprühdose nach der Erfindung ist in der Zeichnung schematisch vereinfacht dargestellt und wird in der nachfolgenden Beschreibung näher erläutert. Es zeigt
- Fig. 1: eine perspektivische Ansicht einer Sprühdose;

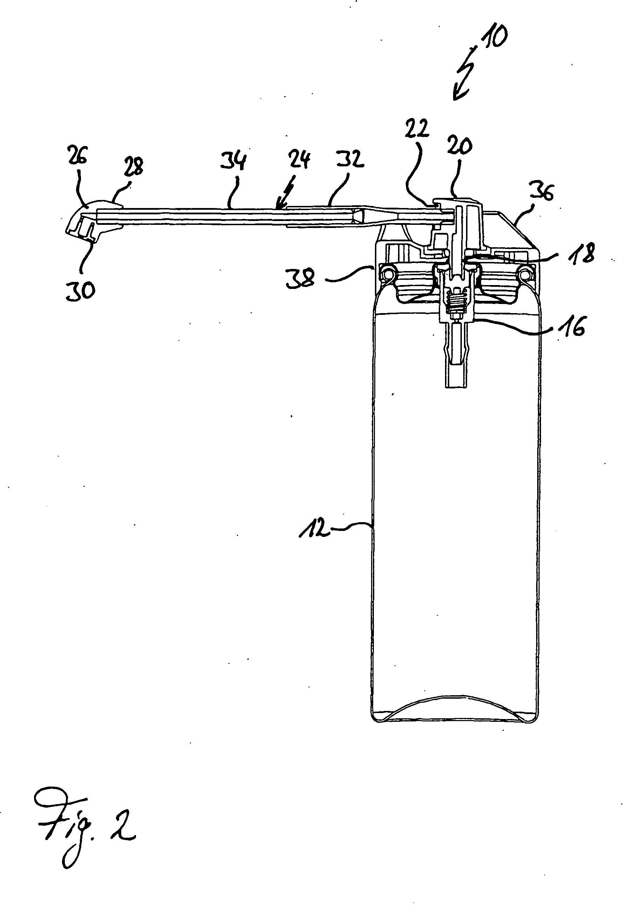

- Fig. 2: einen Längsschnitt durch die Sprühdose;

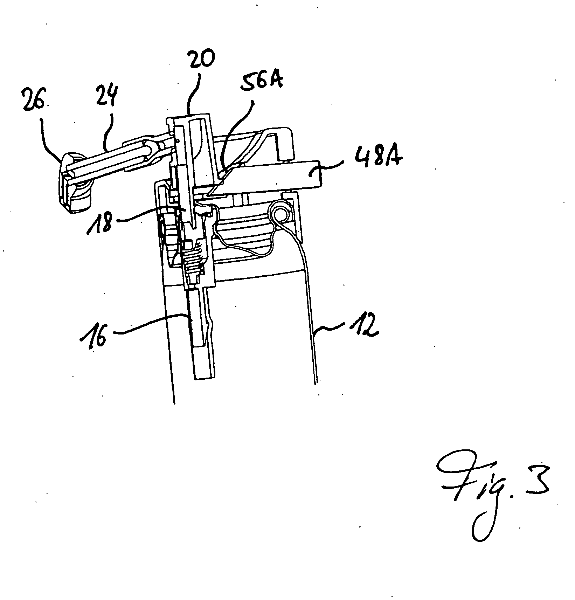

- Fig. 3: eine weitere Schnittdarstellung der Sprühdose;

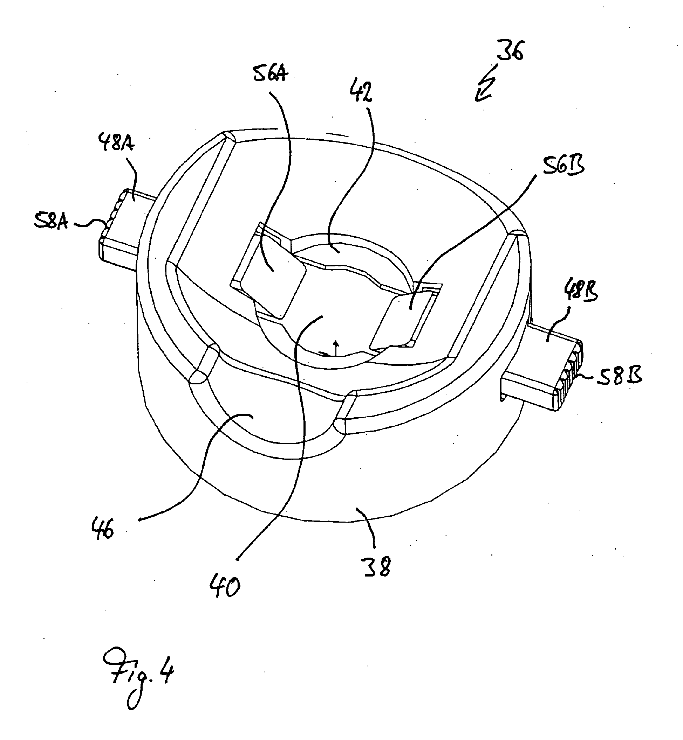

- Fig. 4: eine perspektivische Draufsicht auf einen Aufsatz der Sprühdose;

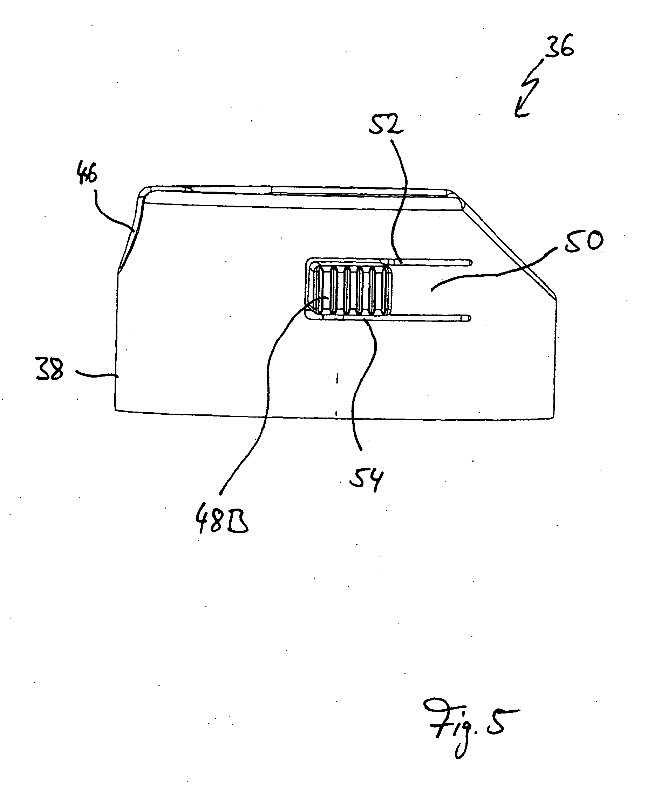

- Fig. 5: eine Seitenansicht des Aufsatzes; und

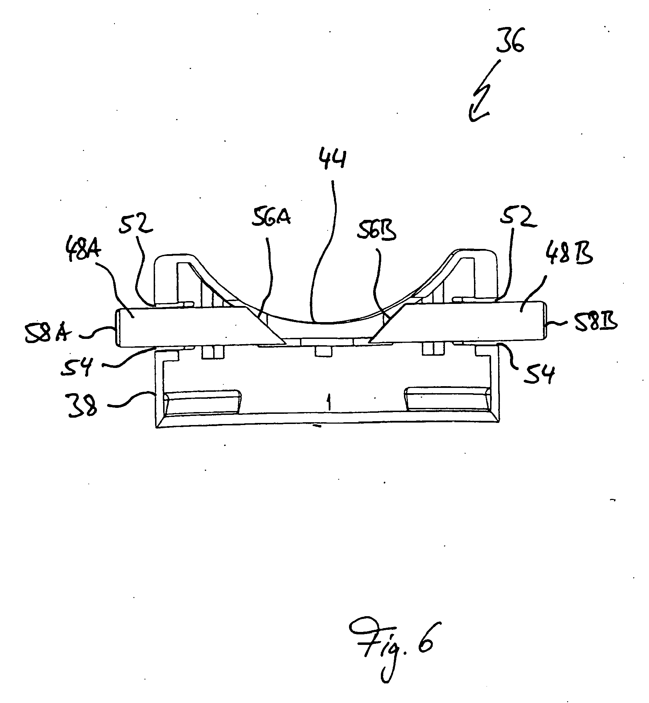

- Fig. 6: einen Schnitt durch den Aufsatz entlang der Linie VI-VI in Fig. 5.

In der Zeichnung ist eine Sprühdose 10 dargestellt, die zum Beaufschlagen einer Zahnfläche mit einem Mattierungsmittel dient, so dass dieser nach Beaufschlagung mit dem Mattierungsmittel mit einem Kamerasystem vermessen werden kann. Das Kamerasystem ist beispielsweise Bestandteil eines Systems zur Herstellung von Keramikinlays, Implantaten oder dergleichen.

Die Sprühdose 10 umfasst einen zylindrischen Dosenkörper 12, in dem das Mattierungsmittel vorgehalten wird. Der Dosenkörper 12 hat einen geschlossenen Boden 14 sowie an der dem Boden 14 abgewandten Stirnseite ein Dosenventil 16, das ein weibliches Ventil darstellt und in das über einen axialen Zapfen 18 ein Sprühkopf 20 eingesteckt ist. Das Dosenventil 16 und der Sprühkopf 20 sind in herkömmlicher Weise ausgebildet.

In den Sprühkopf 20 ist in dessen Austrittsöffnung 22 eine Kanüle 24 bzw. ein Rohr 24 eingesteckt, das an dem dem Sprühkopf 20 abgewandten Ende mit einer Oraldüse 26 versehen ist. Die Oraldüse 26 weist ein bogenförmiges Gehäuse 28 auf, das mit der Kanüle 24 verbunden ist, so dass die Achse einer Austrittsöffnung 30 der Oraldüse 26 gegenüber der Achse der Kanüle 24 angestellt ist.

Die Kanüle 24 selbst ist teleskopierbar ausgebildet und weist zwei Rohrstücke 32 und 34 auf, die aneinander geführt sind. Das Rohrstück 34, an dem das Gehäuse 28 der Oraldüse 26 angebracht ist, ist in dem mit dem Sprühkopf 20 verbundenen Rohrstück 32 geführt.

Zur Dichtung kann im Führungsbereich zwischen dem äußeren Rohrstück 32 und dem inneren Rohrstück 34 ein Dichtmittel, beispielsweise ein Dichtring oder ein Dichtbund vorgesehen sein. Dieser kann mit Nuten des anderen Rohrstücks zusammenwirken, so dass Raststellungen zwischen dem inneren Rohrstück 34 und dem äußeren Rohrstück 32 definiert sind.

Des Weiteren umfasst die Sprühdose 10 einen Aufsatz 36, der an der Oberseite, d. h. an der Seite des Sprühkopfs 20 des Dosenkörpers 12 auf letzteren aufgesetzt ist und eine Umfangswand 38 hat, die im Wesentlichen mit der Umfangswand des Dosenkörpers 12 fluchtet.

Der Aufsatz 36, der ein einstückiges Spritzgießteil darstellt, weist eine zentrale Ausnehmung 40 auf, die von dem Sprühkopf 20 zur Kopplung mit dem Dosenventil 16 durchgriffen ist.

Im Bereich der zentralen Ausnehmung 40 weist der Aufsatz des Weiteren einen radial nach innen weisenden, unterbrochenen Ringbund 42 auf, der als Anschlag für den Sprühkopf 20 dient, so dass der Ausströmdruck des in dem Dosenkörper 12 vorgehaltenen Markierungsmittels bei Drücken des Sprühkopfs 20 begrenzt werden kann. Der Sprühkopf 20 schlägt mithin bei seinem Niederdrücken an dem Ringbund 42 an.

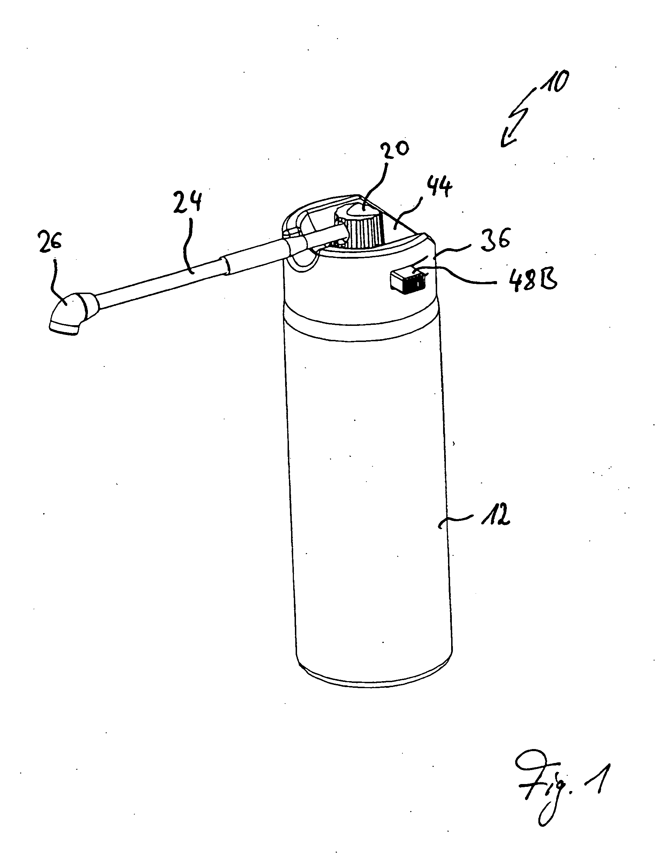

Wie insbesondere Fig. 1 zu entnehmen ist, ist der Sprühkopf 20 in einer Mulde 44 des Aufsatzes 36 angeordnet. Die Kanüle 24 durchgreift hierbei eine bogenförmige Ausnehmung 46 des Aufsatzes 36.

Des Weiteren umfasst der Aufsatz 36 zwei einander gegenüberliegende stößelartige Zapfen 48A und 48B, die sich bezogen auf die Achse des Dosenkörpers 12 in radialer Richtung erstrecken und eine Abhebeeinrichtung zum Lösen des Sprühkopfs 20 von dem Dosenventil 16 darstellen.

Die Zapfen 48A und 48B sind jeweils einstückig mit dem Aufsatz 36 ausgebildet und an einer Federlasche 50 angebunden, die von der von den Zapfen 48A und 48B durchgriffenen Umfangswand 38 des Aufsatzes 36 gebildet ist und zur Herstellung der Federwirkung von einem oberen Schlitz 52 und einem unteren Schlitz 54 begrenzt ist. Die Schlitze 52 und 54 verlaufen jeweils in Umfangsrichtung der Umfangswand 38.

Die Zapfen 48A und 48B haben jeweils im Bereich der zentralen Ausnehmung 40 eine als Auflauframpe für den Sprühkopf 20 ausgebildete Wirkfläche 56A bzw. 56B, die beim Drücken der Zapfen 48A und 48B mit dem unteren Rand bzw. der Unterseite des Sprühkopfs 20 zusammenwirken und so ein Untergreifen des Sprühkopfs 20 durch die Zapfen 48A und 48B ermöglicht.

Um ein Abrutschen eines Benutzers von den Zapfen 48A und 48B im Wesentlichen zu verhindern, weisen diese an den den Rampen 56A bzw. 56B abgewandten Seiten jeweils eine Riffelung 58A bzw. 58B auf.

### Bezugszeichen

- 10: Sprühdose
- 12: Dosenkörper
- 14: Boden
- 16: Dosenventil
- 18: Zapfen
- 20: Sprühkopf
- 22: Austrittsöffnung
- 24: Kanüle
- 26: Oraldüse
- 28: Gehäuse
- 30: Austrittsöffnung
- 32: Rohrstück
- 34: Rohrstück
- 36: Aufsatz
- 38: Umfangswand
- 40: Ausnehmung
- 42: Ringbund
- 44: Mulde
- 46: Ausnehmung
- 48A, 48B: Zapfen
- 50: Federlasche
- 52: Schlitz
- 54: Schlitz
- 56A, 56B: Auflauframpe
- 58A, 58B: Riffelung

## Patentansprüche

1. Sprühdose, mit einem Dosenkörper (12) zur Aufnahme eines zu versprühenden Stoffes, einem Sprühkopf (20), der auf ein an der Oberseite des Dosenkörpers (12) angeordnetes Dosenventil (16) aufgesteckt ist, sowie einem Aufsatz (36), der auf den Dosenkörper (12) an dessen Oberseite aufgesetzt ist und eine zentrale Ausnehmung (40) zur Kopplung des Sprühkopfes (20) mit dem Dosenventil (16) umfasst und mit einer Abhebeeinrichtung für den Sprühkopf (20) versehen ist, durch deren Betätigung der Sprühkopf (20) von dem Dosenventil (16) lösbar ist, **dadurch gekennzeichnet, dass** die Abhebeeinrichtung mindestens einen stößelartigen Zapfen (48A, 48B) umfasst, der mit einer dem Dosenkörper (12) zugewandten Fläche oder Kante des Sprühkopfes (20) zusammenwirkt und zum Lösen des Sprühkopfes (20) von dem Dosenventil (16) den Sprühkopf (20) untergreift.

2. Sprühdose nach Anspruch 1, **dadurch gekennzeichnet, dass** der Zapfen (48A, 48B) stirnseitig eine Auflauframpe (56A, 56B) für den Sprühkopf (20) aufweist.

3. Sprühdose nach Anspruch 1 oder 2, **dadurch gekennzeichnet, dass** der Aufsatz (36) ein einstückiges Kunststoffspritzgießteil ist.

4. Sprühdose nach einem der Ansprüche 1 bis 3, **dadurch gekennzeichnet, dass** der Aufsatz (36) eine zylindrische Umfangswand (38) hat, die im Wesentlichen mit dem Umfang des Dosenkörpers (12) fluchtet und an der der mindestens eine Zapfen (48A, 48B) einstückig angeformt ist.

5. Sprühdose nach Anspruch 4, **dadurch gekennzeichnet, dass** der mindestens eine Zapfen (48A, 48B) federnd mit der Umfangswand (38) verbunden ist.

6. Sprühdose nach Anspruch 4 oder 5, **dadurch gekennzeichnet, dass** die Umfangswand (38) oberhalb und/oder unterhalb des Zapfens (48A, 48B) zur Ausbildung einer Federlasche (52), mit der der Zapfen verbunden ist, jeweils einen in Umfangsrichtung verlaufenden Schlitz (52, 52) hat.

7. Sprühdose nach einem der Ansprüche 1 bis 6, **dadurch gekennzeichnet, dass** der Aufsatz (36) einen Anschlag (42) für den Sprühkopf (20) bei dessen Niederdrücken aufweist.

8. Sprühdose nach Anspruch7, **dadurch gekennzeichnet, dass** der Anschlag (36) von einem radial nach innen vorspringenden Bund im Bereich der Ausnehmung (40) gebildet ist.

9. Sprühdose nach Anspruch 8, **dadurch gekennzeichnet, dass** der Bund (36) im Bereich des Zapfens (48A, 48B) unterbrochen ist.

10. Sprühdose nach einem der Ansprüche 1 bis 9, **dadurch gekennzeichnet, dass** der Sprühkopf (20) in einer Mulde (44) des Aufsatzes (36) angeordnet ist.

11. Sprühdose nach einem der Ansprüche 1 bis 10, **dadurch gekennzeichnet, dass** in den Sprühkopf (20) eine Kanüle (24) bzw. ein Abgaberohr eingesteckt ist.

12. Sprühdose nach Anspruch 11, **dadurch gekennzeichnet, dass** die Kanüle (24) teleskopierbar ist.

13. Sprühdose nach Anspruch 11 oder 12, **dadurch gekennzeichnet, dass** der Aufsatz (36) einen Ausschnitt (46) zum Durchtritt der Kanüle (24) hat.

14. Sprühdose nach einem der Ansprüche 11 bis 13, **dadurch gekennzeichnet, dass** an dem dem Sprühkopf (20) angewandten Ende der Kanüle (24) eine Düse (26) angeordnet ist.

15. Sprühdose nach Anspruch 14, **dadurch gekennzeichnet, dass** die Düse (26) ein bogenförmiges Gehäuse (28) hat, das mit der Kanüle (24) verbunden ist, so dass die Achse der Austrittsöffnung gegenüber der Achse der Kanüle angestellt ist.

16. Sprühdose nach Anspruch 14 oder 15, **dadurch gekennzeichnet, dass** die Düse (26) eine Oraldüse ist, mittels der eine Pigmentsuspension zerstäubbar ist.

17. Sprühdose nach Anspruch 15, **dadurch gekennzeichnet, dass** die das Gehäuse (28) der Düse (26) einen Durchmesser von etwa 3 bis 8 mm und eine Länge von etwa 10 bis 15 mm hat.

## Claims

1. Spray can including a can body (12) containing the substance to be sprayed, a spray head (20) plugged on a can valve (16) that is arranged at the upper side of the can body, and a fixture (36) that is fitted on the upper side of the can body (12) and that is provided with a central clearance (40) to couple the spray head (20) with the can valve (16) plus a lifting device for the spray head (20) by use of which the spray head (20) can be removed from the can valve (16), **characterized in that** the lifting device comprises at least one stud (48A, 48B) in the form of a pusher interacting with an area or edge of the spray head (20) facing the can body (12), whereby the stud engages under the spray head (20) to loosen the spray head (20) from the can valve (16).

2. Spray can according to claim 1, **characterized in that** the stud (48A, 48B) is, on the front side, provided with a run-up ramp (56A, 56B) for the spray head (20).

3. Spray can according to claim 1 or 2, **characterized in that** the fixture (36) is a plastic injection molding part in one piece.

4. Spray can according to one of the claims 1 to 3, **characterized in that** the fixture (36) has a cylindrical peripheral wall (38) that is primarily aligned with the circumference of the can body (12) and on which at least one stud (48A, 48B) is molded on in one piece.

5. Spray can according to claim 4, **characterized in that** at least one stud (48A, 48B) is elastically connected with the peripheral wall (38).

6. Spray can according to claim 4 or 5, **characterized in that** the peripheral wall (38) is, above and / or below the stud (48A, 48B), provided with a slot (52, 52) extending in peripheral direction in order to form a spring shackle (52) that is connected to the stud.

7. Spray can according to one of the claims 1 to 6, **characterized in that** the fixture (36) is provided with a body stop (42) which stops the depressed spray head (20).

8. Spray can according to claim 7, **characterized in that** the body stop (36) is formed in the recess section (40) by a collar which projects radially to the inside.

9. Spray can according to claim 8, **characterized in that** the collar (36) is discontinued in the stud section (48A, 48B).

10. Spray can according to one of the claims 1 to 9, **characterized in that** the spray head (20) is arranged within a hollow (44) of the fixture (36).

11. Spray can according to one of the claims 1 to 10, **characterized in that** a cannula (24) and / or a delivery tube is inserted into the spray head (20).

12. Spray can according to claim 11, **characterized in that** the cannula (24) is telescopic.

13. Spray can according to claim 11 or 12, **characterized in that** the fixture (36) is provided with a cutout (46) for the passage of the cannula (24).

14. Spray can according to one of the claims 11 to 13, **characterized in that** a nozzle (26) is arranged on the end of the cannula (24) facing the spray head (20).

15. Spray can according to claim 14, **characterized in that** the nozzle (26) is provided with a curved housing (28), which is connected to the cannula (24), so that the axis of the discharge opening is aligned with the cannula axis.

16. Spray can according to claim 14 or 15, **characterized in that** the nozzle (26) is an oral nozzle by use of which it is possible to atomize a pigment suspension.

17. Spray can according to claim 15, **characterized in that** the housing (28) of the nozzle (26) has a diameter of approx. 3 to 8 mm and a length of approx. 10 to 15 mm.

## Revendications

1. Bombe aérosol avec un corps de récipient (12) pour réception d'une matière à pulvériser, une tête de pulvérisateur (20) qui est enfichée sur une soupape du récipient (16) placée sur le côté supérieur du corps de récipient (12), et un cache (36) qui est posé sur le corps de récipient (12) sur son côté supérieur et qui comprend une admission centrale (40) pour l'assemblement de la tête de pulvérisateur (20) avec la soupape de récipient (16) et qui est pourvu d'un dispositif de soulèvement pour la tête de pulvérisateur (20) par l'actionnement duquel la tête de pulvérisation (20) est détachable de la soupape du récipient (16), **caractérisée en ce que** le dispositif de soulèvement comprend au moins un axe fixe sous forme de poussoir (48A, 48B) qui agit en interaction avec une surface tournée ver le corps de récipient (12) ou un bord de la tête de pulvérisateur (20) et qui emboîte la tête de pulvérisateur (20) par le bas pour débloquer la tête de pulvérisateur (20) de la soupape du récipient (16).

2. Bombe aérosol selon revendication 1, **caractérisée en ce que** l'axe fixe (48A, 48B) présente côté face une rampe inclinée (56A, 56B) pour la tête de pulvérisateur (20).

3. Bombe aérosol selon les revendications 1 et 2 **caractérisée en ce que** le cache (36) est une pièce en plastique moulée par injection.

4. Bombe aérosol selon l'une des revendications 1 à 3 **caractérisée en ce que** le cache a une paroi périphérique cylindrique (38) qui est alignée principalement avec le contour du corps de récipient (12) et sur laquelle l'axe fixe (48A, 48B) est moulé en une pièce.

5. Bombe aérosol selon revendication 4 **caractérisée en ce que** l'axe fixe minimum (48A, 48B) est relié sur ressort avec la paroi périphérique (38).

6. Bombe aérosol selon revendication 4 ou 5 **caractérisée en ce que** la paroi périphérique (38) est reliée en amont et/ou en aval de l'axe fixe (48A, 48B) pour la formation d'une languette élastique (52) avec l'axe fixe, et a respectivement une fente radiale (52, 52) dans le sens du contour.

7. Bombe aérosol selon l'une des revendications 1 à 6, **caractérisée en ce que** le cache (36) présente une butée (42) pour la tête de pulvérisateur (20) à l'endroit de son enfoncement.

8. Bombe aérosol selon revendication 7 **caractérisée en ce que** la butée (36) est formée par une liaison proéminente radialement vers l'extérieur dans la zone d'admission (40).

9. Bombe aérosol selon revendication 8 **caractérisée en ce que** la liaison (36) est interrompue dans la zone de l'axe fixe (48A, 48B).

10. Bombe aérosol selon l'une des revendications 1 à 9 **caractérisée en ce que** la tête de pulvérisateur est placée dans un creux du cache (36).

11. Bombe aérosol selon l'une des revendications 1 à 10 **caractérisée en ce que** dans la tête de pulvérisateur (20) une canule (24) ou un tuyau de débit est inséré.

12. Bombe aérosol selon revendication 11 **caractérisée en ce que** la canule (24) est extensible.

13. Bombe aérosol selon revendication 11 ou 12 **caractérisée en ce que** le cache (36) a une découpure (46) pour l'insertion de la canule (24).

14. Bombe aérosol selon l'une des revendications 11 à 13, **caractérisée en ce que** sur l'extrémité de la canule (24) tournée vers la tête de pulvérisateur (20) est placée une buse (26).

15. Bombe aérosol selon revendication 14 **caractérisée en ce que** la buse (26) a un boîtier arqué (28), qui est relié avec la canule (24), de telle manière que l'axe de l'orifice de sortie est placé face à l'axe de la canule.

16. Bombe aérosol selon revendication 14 ou 15, **caractérisée en ce que** la buse (26) est une buse orale au moyen de laquelle une suspension de pigment peut être pulvérisée.

17. Bombe aérosol selon revendication 15 **caractérisée en ce que** le boîtier (28) de la buse (26) a un diamètre d'environ 3 à 8 mm et une longueur d'environ 10 à 15 mm.
